# FASCICULE DE BREVET EUROPEEN

(11) **EP 0 582 505 B1**
(45) Date de publication et mention de la délivrance du brevet: **20.03.1996**
(21) Numéro de dépôt: 93401926.6
(22) Date de dépôt: 23.07.1993
(51) Int. Cl.: B60K 20/04, B60K 20/08, F16H 59/10

(54) **Dispositif pour commander une boîte de vitesses automatique de véhicule automobile**
Betätigungsvorrichtung für ein automatisches Kraftfahrzeuggetriebe
Device for controlling an automatic transmission of a car

(30) Priorité: 06.08.1992 FR 9209793
(43) Date de publication de la demande: 09.02.1994
(73) Titulaire: AUTOMOBILES PEUGEOT, F-75116 Paris (FR); AUTOMOBILES CITROEN, F-92200 Neuilly sur Seine (FR)
(72) Inventeur: Chretien, Philippe, F-78430 Louveciennes (FR)
(74) Mandataire: Durand, Yves Armand Louis

(56) Documents cités:
- EP-A- 0 331 797
- DE-A- 2 943 482
- DE-A- 3 717 675
- FR-A- 2 348 077

## Description

La présente invention concerne un dispositif de commande d'une boîte de vitesses automatique applicable aux véhicules automobiles.

On connaît déjà d'après le document FR-A-2 348 077 un dispositif de changement de vitesses comprenant un levier traversant une grille apte à permettre la sélection manuelle des positions d'engagement "marche avant", ou "marche arrière" et des positions "point neutre" et "frein de parc".

Ces positions correspondent à des encoches sur un même côté de la grille et dans lesquelles peut être engagé le levier qui est déplaçable longitudinalement dans la grille et qui peut être maintenu par une force transversale de rappel dans lesdites encoches.

EP-A-0 331 797 montre un dispositif pour commander une boîte de vitesses selon le préambule de la revendication 1, dont la grille présente, pour guider un levier de vitesses, une encoche transversale correspondant à la position marche avant (D) et prolongée par deux appendices longitudinaux opposés.

L'invention a pour objet une commande de boîte de vitesses du genre défini ci-dessus mais comprenant une grille permettant avantageusement, en combinaison avec le levier, de regrouper un certain nombre de fonctions telles que l'arrêt et le démarrage du moteur du véhicule, ainsi que le passage rapide d'un rapport de boîte de vitesses à un autre.

A cet effet l'invention a pour objet un dispositif de commande de boîte de vitesses automatique un levier de manoeuvre selon les caractéristiques de la revendication 1. Ce dispositif comprend traversant la paroi d'un support par une ouverture formant grille dont un bord comporte des encoches de positionnement du levier et quatre positions frein de parc P, marche arrière R, point mort N et marche avant D espacées suivant une direction de déplacement longitudinal du levier, celui-ci étant maintenu alternativement dans ces encoches par une force transversale de rappel, caractérisé en ce que l'encoche correspondant à la position D traverse un plan longitudinal de part et d'autre duquel le levier est rappelé vers ce plan par des forces opposées, et se prolonge par un appendice longitudinal recevant le levier dans une seconde position symétrique de la première par rapport au plan précité.

Suivant une autre caractéristique de ce dispositif des contacts transversaux sont placés dans l'appendice correspondant au point neutre, ces contacts étant actionnables par le levier et assurent respectivement l'arrêt et le démarrage du moteur du véhicule.

Selon encore une autre caractéristique, des contacts longitudinaux sont placés dans l'encoche correspondant à la marche avant du véhicule, ces contacts étant actionnables par le levier et assurant respectivement une montée ou une descente du rapport supérieur sélectionnable automatiquement de la boîte de vitesses.

On précisera encore qu'on peut obtenir une maitrise totale des rapports en sélectionnant de façon connue l'un des trois programmes de passage de vitesses, respectivement économique, sport, et manuel, au moyen de trois touches rassemblées sur une console ou sur le tableau de bord du véhicule.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple et dans lesquels.

La figure 1 est une vue schématique du tableau de bord et de la commande de boîte de vitesses d'un véhicule équipé d'un dispositif conforme à l'invention.

La figure 2 est une vue schématique et en plan d'une grille de sélection des différentes positions du levier de commande de la boîte de vitesses.

La figure 3 est une vue similaire à la figure 2 mais illustrant les contacts transversaux placés dans l'encoche correspondant à la marche avant.

Les figures 4a et 4b illustrent en perspective deux modes de réalisation d'une boule de levier de commande de la boîte de vitesses.

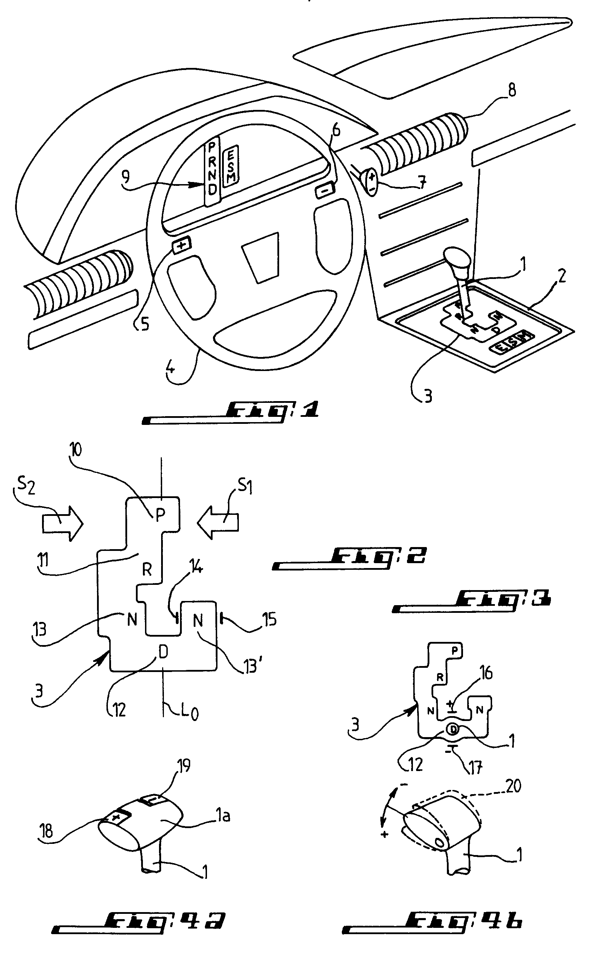

On voit sur la figure 1, un dispositif de commande de la boîte de vitesses automatique d'un véhicule qui comprend un levier 1 de manoeuvre traversant la paroi d'un support 2. Sur ce support est disposée une grille 3 comportant des encoches de positionnement du levier 1 pour une position P de frein de parc, une position R de marche arrière, deux positions N de point mort et une position D de marche avant.

Le support 2 comprend également des touches E économique, S sport et M manuel qui permettent de sélectionner un programme de passages de vitesses dans le but de maîtriser totalement les rapports.

Sur le volant 4 se trouvent deux touches 5 et 6 qui permettent, comme on l'expliquera en détails plus loin de faire monter ou de faire descendre le rapport supérieure sélectionnable automatiquement. Une telle fonction peut également être réalisée à l'aide d'une manette 7 articulée sur le tableau de bord 8. Ce tableau de bord comporte aussi l'affichage en 9 des informations de l'emplacement du levier 1 sur la grille 3 et sur la position des touches E, S et M.

En se reportant à la figure 2, on voit que la grille 3 comporte successivement une encoche 10 correspondant à la position P de frein de parc, une encoche 11 correspondant à la position R de marche arrière, une encoche 12 correspondant à la position D dite de marche avant, et des encoches 13 et 13' symétriques par rapport à un axe longitudinal Lo passant par les encoches 10 et 12, lesdites encoches 13 et 13' correspondant chacune à une position N de point mort. A l'encoche 13' sont associés deux contacts transversaux 14 et 15 placés de part et d'autre de cette encoche.

Le levier 1 est toujours sollicité ou rappelé vers l'axe longitudinal Lo grâce à deux forces opposées, perpendiculaires à l'axe Lo et repérées schématiquement par les flèches S₁ et S₂. Par conséquent, lorsque le levier 1 se trouve dans l'encoche 13', il se trouve plaqué contre le contact 14, ce qui correspond à l'arrêt du moteur. En revanche, lorsque le levier 1, se trouvant toujours dans l'encoche 13', est actionné vers la droite de la figure 2, à l'encontre de la force de rappel S₁, ledit levier entrera en contact avec le contact 15, ce qui provoquera le démarrage du moteur.

Ensuite, on peut procéder au déplacement du levier 1, parallèlement à l'axe Lo, depuis l'encoche 13' jusqu'à l'encoche 12, ce qui permet la mise en marche normale du véhicule.

A cet égard, comme on le voit bien sur la figure 3, des contacts 16 et 17 sont associés à l'encoche 12 et sont situés par exemple dans l'axe longitudinal Lo, de part et d'autre de ladite encoche, en pied de levier sous la grille. Ces contacts 16 et 17 peuvent être actionnés par le levier 1 lui-même, ou bien par les touches précitées 5 et 6 sur le volant 4, ou encore par la manette 7 sur le tableau de bord 8.

Ces contacts 16 et 17 peuvent encore être actionnés en agissant sur la boule 1a du levier 1, plus précisément sur des touches 18 et 19 de cette boule, comme cela apparaît clairement sur la figure 4a. Les contacts 16 et 17 peuvent encore être actionnés par le pivotement de la boule ou d'une tête 20 du levier 1, comme cela est visible sur la figure 4b.

Il convient de préciser ici que les contacts 16 et 17 actionnables comme indiqué précédemment permettent de monter (+) ou de descendre (-) le rapport supérieur sélectionnable automatiquement de la boîte de vitesses du véhicule.

Pour revenir à la position de point mort, à partir de la position D (marche normale), le conducteur pourra déplacer le levier 1 soit vers l'encoche 13', ou encore vers l'encoche 13 qui est une position de point mort normal, contrairement à la position de point mort de l'encoche 13' qui permet le démarrage du moteur à l'aide du levier 1, tout comme le ferait une clé de contact, comme cela est classique.

On a donc réalisé suivant l'invention un dispositif de sélection des rapports de vitesses d'une boîte automatique, avec une meilleure répartition des différentes encoches sur la grille, lesdites encoches étant plus espacées que dans les grilles usuelles, de sorte qu'au total la précision de commande des rapports de vitesses s'en trouve grandement améliorée. En outre, la répartition et la découpe des encoches dans la grille de part et d'autre d'une ligne longitudinale de rappel central est telle qu'elles permettent avantageusement au conducteur d'agir "en aveugle" sur le levier de commande. Cet avantage s'applique également à la commande d'une montée ou d'une descente du rapport supérieur sélectionnable automatiquement, dans la position D, en agissant par exemple sur le levier 1 à fonctions multiples.

Bien entendu, l'invention n'est nullement limitée aux modes de réalisation décrits et illustrés qui n'ont été donnés qu'à titre d'exemple.

## Revendications

1. Dispositif pour commander une boîte de vitesses automatique de véhicule automobile, du type comprenant un levier (1) de manoeuvre traversant la paroi d'un support (2) par une ouverture formant grille (3) dont un bord comporte des encoches (10-13, 13') de positionnement du levier pour quatre positions, frein de parc (P, 10), marche arrière (R, 11), point mort (N, 13) et marche avant (D, 12) espacées suivant une direction de déplacement longitudinal du levier (1) qui peut être maintenu alternativement dans ces encoches (10-13, 13') par une force transversale de rappel, caractérisé en ce que l'encoche (12) correspondant à la position marche avant (D) traverse un plan longitudinal (Lo) de part et d'autre duquel le levier (1) est rappelé vers ce plan longitudinal (Lo) par des forces opposées (S₁ et S₂), et se prolonge par un appendice longitudinal (13') recevant le levier (1) dans une seconde position point mort (N, 13') symétrique de la première position point mort (N, 13) par rapport au plan longitudinal (Lo).

2. Dispositif selon la revendication 1, caractérisé en ce que des contacts transversaux (14, 15) sont placés dans l'appendice longitudinal (13'), et sont actionnables à l'aide du levier (1) pour assurer respectivement l'arrêt et le démarrage du moteur du véhicule.

3. Dispositif selon la revendication 1 ou 2, caractérisé en ce que des contacts longitudinaux (16, 17) sont placés dans l'encoche (12) correspondant à la position marche avant (D), ces contacts étant actionnables à l'aide du levier (1) et assurant respectivement une montée ou une descente du rapport supérieur sélectionnable automatiquement de la boîte de vitesses.

## Claims

1. Device for controlling an automatic change speed gearbox of an automotive vehicle, of the type comprising an operating lever (1) extending through the wall of a support (2) through a gate-shaped opening (3) one edge of which comprises notches (10-13, 13') for the positioning of the lever in four positions : parking brake (P, 10), reverse run (R, 11), neutral gear (N, 13) and forward run (D, 12) spaced in a direction of longitudinal displacement of the lever (1) which may be alternately held in these notches (10-13, 13') by a transverse return force, characterized in that the notch (12) corresponding to the forward run position (D) extends through a longitudinal plane (Lo) on either side of which the lever (1) is urged towards this longitudinal plane (Lo) by opposite forces (S₁ and S₂) and is extended by a longitudinal extension portion (13') receiving the lever (1) in a second neutral gear position (N, 13') symmetrical of the first neutral gear position (N, 13) with respect to the longitudinal plane (Lo).

2. Device according to claim 1, characterized in that transverse contact pieces (14, 15) are placed in the longitudinal extension portion (13') and are actuatable with the assistance of the lever (1) to ensure the stop and the start, respectively, of the engine of the vehicle.

3. Device according to claim 1 or 2, characterized in that longitudinal contact pieces (16, 17) are placed in the notch (12) corresponding to the forward run position (D), these contact pieces being operable with the assistance of the lever (1) and ensuring a shifting up or a shifting down from the automatically selectable upper gear ratio of the change speed gearbox.

## Patentansprüche

1. Vorrichtung zur Betätigung eines automatischen Geschwindigkeitswechselgetriebes eines Kraftfahrzeuges, der einen Schalthebel (1) umfassenden Gattung, der die Wand einer Halterung (2) durch eine ein Gatter bildende Öffnung (3) durchsetzt, deren eine Rand Kerben (10 - 13, 13') zur Stellung des Hebels in vier Stellungen: Feststellbremse (P, 10), Rückwärtsgang (R, 11), Leerlaufstellung (N, 13) und Vorwärtsgang (D, 12) aufweist, die im Abstand voneinander in einer Längsverschiebungsrichtung des Hebels (1) angeordnet sind, der abwechselnd in diesen Kerben (10-13, 13') durch eine Rückstellquerkraft gehalten werden kann, dadurch gekennzeichnet, dass die der Vorwärtsgangsstellung (D) entsprechende Kerbe (12) eine Längsebene (Lo) durchsetzt, beiderseits welcher der Hebel (1) zu dieser Längsebene (Lo) hin durch entgegengesetzte Kräfte (S₁ und S₂) rückstellend beaufschlagt wird und sich durch einen Längsansatz (13') fortsetzt, der den Hebel (1) in einer zweiten Leerlaufstellung (N, 13') aufnimmt, welche gegenüber der ersten Leerlaufstellung (N, 13) in bezug auf die Längsebene (Lo) symmetrisch ist.

2. Vorrichtung nach Anspruch 1, dadurch gekennzeichnet, dass Querkontakte (14, 15) in dem Längsansatz (13') liegen und mit Hilfe des Hebels (1) betätigbar sind, um jeweils den Stillstand und das Anlassen des Motors des Kraftfahrzeuges zu gewährleisten.

3. Vorrichtung nach Anspruch 1 oder 2, dadurch gekennzeichnet, dass Längskontakte (16, 17) in der der Vorwärtsgangsstellung (D) entsprechenden Kerbe (12) gelegen sind, wobei diese Kontakte mit Hilfe des Hebels (1) betätigbar sind und jeweils ein Heraufschalten oder ein Herabschalten des automatisch wählbaren Übersetzungsgangverhältnisses des Wechselgetriebes gewährleisten.
